Europäisches Patentamt

European Patent Office

Office européen des brevets

(11) Veröffentlichungsnummer: **0 217 045**
**A2**

(12) # EUROPÄISCHE PATENTANMELDUNG

(21) Anmeldenummer: 86110352.1

(22) Anmeldetag: 26.07.86

(51) Int. Cl.⁴: **B 01 D 53/36**

(30) Priorität: 03.10.85 DE 3535312

(43) Veröffentlichungstag der Anmeldung:
08.04.87 Patentblatt 87/15

(84) Benannte Vertragsstaaten:
AT BE CH DE FR GB IT LI LU NL SE

(71) Anmelder: Didier Engineering GmbH
Alfredstrasse 28 Postfach 10 09 45
D-4300 Essen 1(DE)

(71) Anmelder: DIDIER-WERKE AG
Lessingstrasse 16-18
D-6200 Wiesbaden(DE)

(72) Erfinder: Flockenhaus, Claus, Prof. Dr.
Tersteegenweg 11
D-4300 Essen 1(DE)

(72) Erfinder: Wagener, Dietrich, Prof. Dr.
Hesselerkamp 7a
D-4300 Essen 16(DE)

(72) Erfinder: Kainer, Hartmut, Dr.
Sauerbruchstrasse 1a
D-6200 Wiesbaden 12(DE)

(72) Erfinder: Bühler, Hans-Eugen, Prof. Dr.
Kastanien-weg 3c
D-6240 Königstein 3(DE)

(72) Erfinder: Stein, Hermann
Auf dem Köppel 2
D-6702 Bad Dürkheim(DE)

(74) Vertreter: Brückner, Raimund
c/o Didier-Werke AG Lessingstrasse 16-18
D-6200 Wiesbaden(DE)

(54) Verfahren zur Senkung des Stickoxidgehaltes von Abgasen.

(57) Die Erfindung bezieht sind auf ein Verfahren zur Senkung des Stickoxidgehaltes der Abgase von Beheizungssystemen mit hohen Verbrennungstemperaturen. Zur wirtschaftlichen und wirksamen Absenkung wird hierbei vorgeschlagen, daß man das Abgas zunächst in an sich bekannter Weise in einem Temperaturbereich zwischen etwa 700 und 1100 °C einer homogenen Gasreaktion durch Zugabe von Reduktionsmitteln unterwirft und anschließend durch einen Wärmerückgewinnungsreaktor führt, dessen Regeneratorbesatzmaterial wenigstens in der Temperaturzone zwischen etwa 200 und 500 ° C als Katalysator zur selektiven Reduktion der Stickoxide ausgebildet ist.

Fig 1

ABGAS

1100°C
700°C

NH$_3$

GITTERSTEINE

400°C
300°C

KATALYSATOR-
GITTERSTEINE

GITTERSTEINE

250°C

ABGASKANAL

ABGAS

01.10.1985

KXR/Ke/Sc  **021704**

PA 3498

DIDIER ENGINEERING GMBH
Alfredstraße 28
4300 Essen 1

und

DIDIER-WERKE AG
Lessingstraße 16-18
6200 Wiesbaden

Verfahren zur Senkung des
Stickoxidgehaltes von Abgasen

Die Erfindung bezieht sich auf ein Verfahren zur Senkung des Stickoxidgehaltes der Abgase von Beheizungssystemen mit hohen Verbrennungstemperaturen.

Aus der DE-AS 28 32 397 ist ein Verfahren zur Senkung des Stickoxidgehaltes von Koksofenabgasen bekannt, wonach man Ammoniak oder ammoniakhaltiges Wasser, vorzugsweise in verdampfter Form, in die Regenerator- oder Rekuperatorzellen dort einsprüht, wo das Koksofenabgas eine Temperatur zwischen 700 und 1100 °C hat. Beheizungssysteme mit hohen Verbrennungstemperaturen, wie Koksöfen, Glaswannen und dergleichen, liefern Abgase mit einem hohen Anteil an Stickoxiden. Beheizungssysteme mit hohen Verbrennungstemperaturen werden ferner zum Teil mit Regeneratoren ausgerüstet, um die im Abgas enthaltene Wärme möglichst weitgehend zurückzugewinnen. Die Kombination der Stickoxidreduzierung mit der Wärmerückgewinnung bereitet bisher technische Schwierigkeiten. Die Abgastemperaturen hinter dem Regenerator liegen nämlich nur bei etwa 150 bis 350 °C. In diesem Temperaturbereich ist die selektive katalytische Reduktion von Stickoxiden mittels Ammoniak oder anderer reduzierender Mittel schlecht. Weiter besteht die Gefahr der Ammonsulfat/Bisulfat-Bildung wie auch der Ammonitratbildung.

0217045

Aufgabe der vorliegenden Erfindung ist es, den Stickoxidgehalt der Abgase von Beheizungssystemen mit hohen Verbrennungstemperaturen wirtschaftlich und wirksam zu senken.

Diese Aufgabe wird erfindungsgemäß dadurch gelöst, daß man das Abgas zunächst in an sich bekannter Weise in einem Temperaturbereich zwischen etwa 700 und 1100 °C, vorzugsweise zwischen etwa 900 bis 1000 °C, einer homogenen Gasreaktion durch Zugabe von Reduktionsmitteln, z.B. $NH_3$, CO, $H_2$, $CH_4$ oder Beheizungsgas, unterwirft und anschließend durch einen Wärmerückgewinnungsreaktor führt, dessen Regeneratorbesatzmaterial wenigstens in der Temperaturzone zwischen etwa 200 und 500 °C, vorzugsweise zwischen 300 und 400 °C, als Katalysator zur selektiven Reduktion der Stickoxide ausgebildet ist.

Auf diese Weise ist eine äußerst wirksame Kombination der Abgasreinigung hinsichtlich des Stickoxidgehaltes mit der Wärmerückgewinnung gefunden worden. Während bei dem an sich bekannten Verfahren zur Senkung des Stickoxidgehaltes von Koksofenabgasen die Gefahr von Reduktionsmittelschlupf besteht, wird nach der Erfindung durch die homogene Gasreaktion bereits beim Durchlaufen der ersten Regeneratorschichten der Stickoxidgehalt um etwa 5 bis 55 % herabgesetzt. Nicht ausreagiertes Reduktionsmittel, z.B. Ammoniak, tritt in der als Katalysatorschicht ausgebildeten Zone des Regenerators mit den restlichen Stickoxiden in Reaktion, so daß der Schlupf beispielsweise von $NH_3$ kleiner als 10 ppm gehalten werden kann. Dadurch, daß man den Regenerator bereichsweise als Katalysator oder den Katalysator als Teil eines Regenerators ausbildet, wird eine äußerst kostengünstige und wirksame Lösung der Senkung des Stickoxidgehaltes bei gleichzeitiger Wärmerückgewinnung vorgeschlagen. Dabei erfolgt die Zugabe des Reduktionsmittels einerseits und die Anordnung des als Katalysator wirkenden Regeneratorbesatzmaterials gerade in solchen Temperaturbereichen, wo jeweils eine optimale Reduktion der Stickoxide durch homogene Gasreaktion bzw. durch selektive katalytische Reaktion erfolgt.

Wenn man $SiO_2/Al_2O_3$-haltiges Regeneratorbesatzmaterial verwendet, welchem in der Temperaturzone zwischen etwa 200 und 500 °C, vorzugsweise zwischen etwa 300 und 400 °C, ein zusätzliches Stickoxid-Katalysatormaterial, vorzugsweise $Fe_2O_3$ und/oder $Cr_2O_3$, beigefügt ist oder von diesem überzogen wird, so erfolgt bereits eine teilweise katalytische Wirkung an dem Regeneratorbesatzmaterial selbst außerhalb der eigentlich katalytisch optimierten Zone, so daß ein günstiger Gesamtwirkungsgrad erzielt wird. Ebenso kann als zusätzliches $NO_x$-Katalysatormaterial auf der Basis von Zeolithen oder $TiO_2/V_2O_5$ beigefügt sein.

Das Reduktionsmittel wird vorzugsweise in den Regeneratorinnenraum oberhalb der Besatzmaterialschichten - gleichmäßig über den Querschnitt verteilt - eingesprüht oder eingeblasen, so daß die Stickoxidreduktion und die Wärmerückgewinnung in ein und derselben Baueinheit erfolgt, welche in herkömmlicher Weise mit Regeneratorbesatzmaterial in der erfindungsgemäß abgewandelten Form bestückt ist.

Bei der Verwendung von $NH_3$ als Reduktionsmittel dosiert man dieses vorzugsweise im Verhältnis $NH_3$ : $NO_x$ zwischen etwa 0,5 und 4,5. Das gleiche gilt analog für die Verwendung von $CH_4$, $H_2$, CO oder Beheizungsgas.

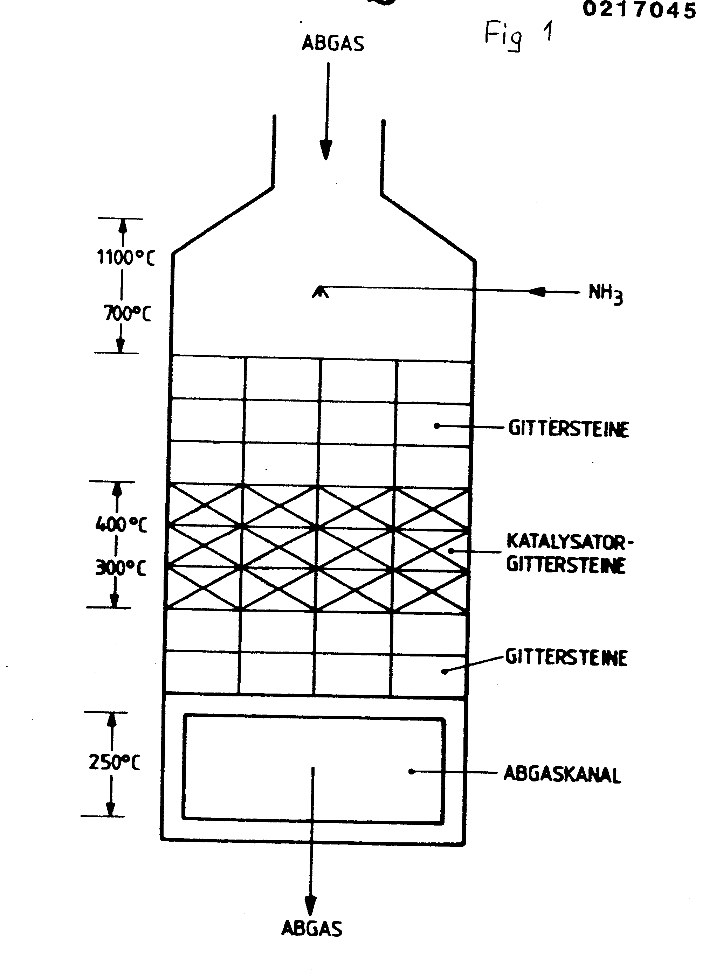

Das erfindungsgemäße Verfahren wird nachfolgend anhand der Zeichnung näher erläutert, welche schematisch einen für die Ausführung dieses Verfahrens bestimmten Reaktor zeigt (Fig. 1). Das heiße Stickoxid enthaltende Abgas wird von oben in das Reaktorbehältnis eingeführt. Dort befindet sich oberhalb der Besatzmaterialschichten eine Vorkammer, in welcher das Abgas eine Temperatur zwischen etwa 700 und 1100 °C hat. In diesen Vorkammerbereich wird das Reduktionsmittel, im dargestellten Falle $NH_3$ über den Querschnitt des Regeneratorbesatzmaterials verteilt mittels Düsenlanzen aus hitzebeständigem Material eingesprüht bzw. eingeblasen. Der eigentliche Wärmerückgewinnungsreaktor besteht aus mehreren Lagen von Regeneratorgittersteinen, beispielsweise aus herkömmlichem Regeneratorbesatzmaterial. In den Wärmerückgewinnungsbereich nimmt die Temperatur von etwa 700 °C (oben) auf etwa 250 °C (unten) ab. In derjenigen Zone, in welcher das Abgas entsprechend den Wärmeübertragungsverhältnissen eine Temperatur zwischen etwa 300 und 400 °C einnimmt, sind die Regeneratorgittersteine gleichzeitig als katalytisch wirksame Steine ausgebildet, was dadurch geschehen kann, daß entweder dem Regeneratorbesatzmaterial ein Katalysatormaterial zur Herstellung der Gittersteine beigemengt ist oder die Regeneratorgittersteine nach ihrer Herstellung mit einem Katalysatormaterial beschichtet oder getränkt werden. Als Katalysatormaterial eignet sich in dem erfindungsgemäßen Verfahren vorzugsweise $Fe_2O_3$ und/oder $Cr_2O_3$. In dieser Katalysatorzone werden die noch im Abgas enthaltenen Stickoxide weitgehend aufgrund der stattfindenden selektiven Reduktion mit Hilfe von nicht ausreagiertem Reduktionsmittel beseitigt. An das untere Ende des eigentlichen von den Gittersteinen gebildeten Wärmerückgewinnungsregenerators schließt sich ein Abgaskanal an, welcher zur Schaffung einer kompakten Bauweise noch in das Reaktorbehältnis mitintegriert sein kann.

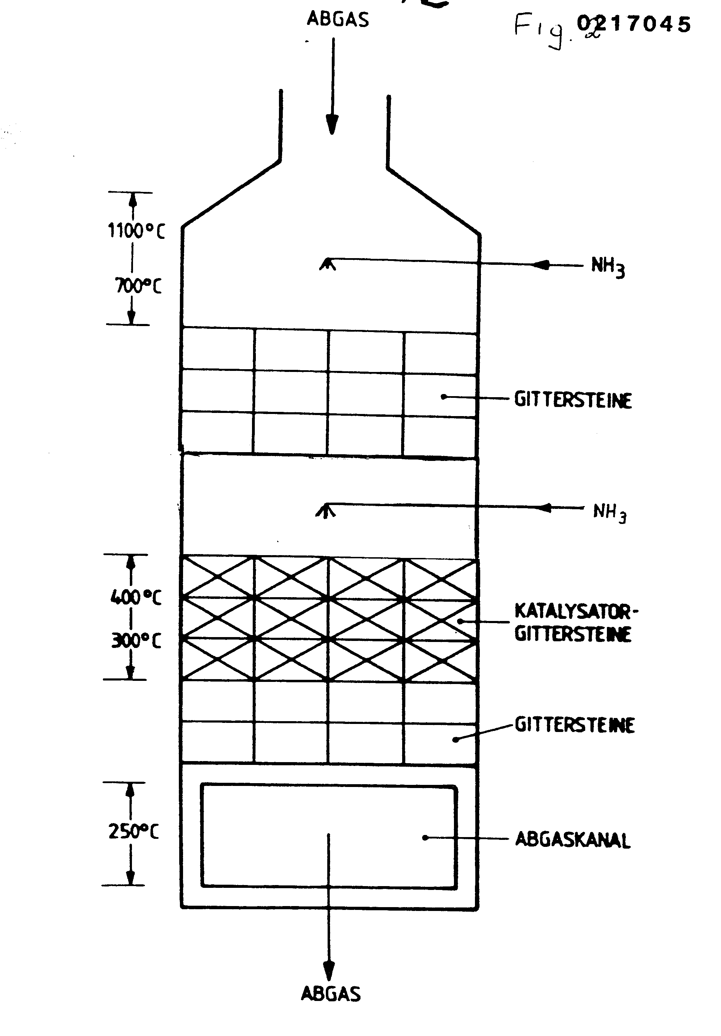

Versuche haben darüberhinaus gezeigt, daß bei abgestufter $NH_3$-Einleitung (Fig. 2) bzw. CO, $CH_4$, $H_2$ oder Beheizungsgas eine besonderes gute Umsetzungsreaktion erfolgt. So ist festgestellt worden, daß der Reduktionsmittel-Schlupf sehr gering einstellbar ist bzw. geringerer $NH_3$-Bedarf besteht.

01.10.1985

KXR/Ke/Sc

PA 3498    **0217045**

DIDIER ENGINEERING GMBH
Alfredstraße 28
4300 Essen 1

und

DIDIER-WERKE AG
Lessingstraße 16-18
6200 Wiesbaden

Verfahren zur Senkung des
Stickoxidgehaltes von Abgasen

P a t e n t a n s p r ü c h e:

1. Verfahren zur Senkung des Stickoxidgehaltes der Abgase von Beheizungssystemen mit hohen Verbrennungstemperaturen, dadurch gekennzeichnet, daß man das Abgas zunächst in an sich bekannter Weise in einem Temperaturbereich zwischen etwa 700 und 1100 °C, vorzugsweise zwischen etwa 900 und 1000 °C, einer homogenen Gasreaktion durch Zugabe von Reduktionsmitteln, z.B. $NH_3$, $CO$, $H_2$, $CH_4$ oder Beheizungsgas, unterwirft und anschließend durch einen Wärmerückgewinnungsreaktor führt, dessen Regeneratorbesatzmaterial wenigstens in der Temperaturzone zwischen etwa 200 und 500 °C, vorzugsweise zwischen 300 und 400 °C, als Katalysator zur selektiven Reduktion der Stickoxide ausgebildet ist.

2. Verfahren nach Anspruch 1, dadurch gekennzeichnet, daß man $SiO_2/Al_2O_3$-haltiges Regeneratorbesatzmaterial verwendet, welchem in der Temperaturzone zwischen etwa 200 und 500 °C, vorzugsweise zwischen etwa 300 und 400 °C, ein zusätzliches $NO_x$-Katalysatormaterial, vorzugsweise $Fe_2O_3$ und/oder $Cr_2O_3$, beigefügt oder von diesem überzogen wird.

3. Verfahren nach Anspruch 1, dadurch gekennzeichnet, daß man SiO$_2$/Al$_2$O$_3$-haltiges Regeneratorbesatzmaterial verwendet, welchem in der Temperaturzone zwischen etwa 200 und 500 °C, vorzugsweise zwischen etwa 300 und 400 °C, ein zusätzliches NO$_x$-Katalysatormaterial auf der Basis von Zeolithen oder TiO$_2$/V$_2$O$_5$ beigefügt ist.

Verfahren nach Anspruch 1, 2 oder 3, dadurch gekennzeichnet, daß man das Reduktionsmittel in den Reaktorinnenraum oberhalb der Besatzmaterialschichten einsprüht oder einbläst.

5. Verfahren nach einem der Ansprüche 1 bis 4, dadurch gekennzeichnet, daß man bei der Verwendung von NH$_3$ als Reduktionsmittel dessen Dosierung im Verhältnis NH$_3$ : NO$_x$ zwischen etwa 0,5 und 4,5 vornimmt.

Verfahren nach einem der Ansprüche 1 bis 4, dadurch gekennzeichnet, daß eine abgestufte NH$_3$-Zugabe erfolgt.

1/2

Fig 1

0217045

ABGAS

1100°C

700°C

NH₃

GITTERSTEINE

400°C

300°C

KATALYSATOR-
GITTERSTEINE

GITTERSTEINE

250°C

ABGASKANAL

ABGAS

Fig. 0217045

ABGAS

1100°C

700°C

NH$_3$

GITTERSTEINE

NH$_3$

400°C

KATALYSATOR-
GITTERSTEINE

300°C

GITTERSTEINE

250°C

ABGASKANAL

ABGAS